# EUROPEAN PATENT APPLICATION

(11) **EP 2 792 470 A1**
(43) Date of publication of application: **22.10.2014**
(21) Application number: 13163676.3
(22) Date of filing: 15.04.2013
(51) Int. Cl.: B29C 70/02, B29B 15/10, B29C 70/22, B29K 105/16, B29K 105/32, B29K 105/30

(54) **Woven fiber-reinforced composite material and method of manufacturing same**

(71) Applicant: BlackBerry Limited, Waterloo, ON N2K 0A7 (CA)
(72) Inventor: Coulson, Simon, Waterloo, Ontario N2L 3W8 (CA); Mehlhorn, Kurt Johannes Gerd, Waterloo, Ontario N2L 3W8 (CA); Seyboth, Uwe, Bochum 44799 (DE)
(74) Representative: Moore, Barry

(57) **Abstract**

A method of manufacturing a fiber-reinforced composite material includes applying a paint layer including pigment to a woven fiber sheet and drying the paint layer on the woven fiber sheet (102), embedding the woven fiber sheet in a resin at a temperature below a melting temperature of the pigment to yield a resin and fiber composite (104), and applying an ultraviolet protectant coating to the resin and fiber composite (110).

## Description

### Field of Technology

The present disclosure relates to the manufacture of woven fiber composite materials, for example, for housings or enclosures for electronic devices.

### Background

Woven fiber composite materials include a woven fiber sheet, such as a woven glass fiber or cloth that is embedded in a resin. The woven fiber provides a generally consistent or substantially uniform distribution or density of fibers that act to reinforce the resin matrix.

Such composite materials are desirable for use in products where weight, mechanical strength, rigidity, and/or dimensional stability are important. For example, a thin housing or enclosure may be formed that still provides mechanical strength, rigidity, and dimensional stability for internal electronic components of an electronic device. Woven fiber composite materials such as glass fiber composite materials also facilitate transmission utilizing an antenna of such an electronic device, as interference with an internal antenna is reduced when a glass fiber composite is utilized as compared to a metal housing, for example.

While carbon fiber composites may provide mechanical strength, rigidity, and dimensional stability, the colour of the carbon fiber, which is typically dark, may limit the colour of the final product that may be manufactured utilizing carbon fiber. Further, such carbon fiber composites may not be desirable for use in a housing of an electronic device because of interference with an internal antenna.

Improvements in woven fiber composite materials are desirable.

### SUMMARY

According to one embodiment, a method of manufacturing a fiber-reinforced composite material includes applying a paint layer including pigment to a woven fiber sheet and drying the paint layer on the woven fiber sheet, embedding the woven fiber sheet in a resin at a temperature below a melting temperature of the pigment to yield a resin and fiber composite, and applying an ultraviolet protectant coating to the resin and fiber composite.

According to another embodiment, a fiber-reinforced composite includes a woven fiber sheet painted with a layer of paint including a pigment to yield a painted sheet, a resin matrix including the painted sheet disposed therein, and an ultraviolet protectant coating disposed on the resin matrix including the painted sheet.

### Brief Description of the Drawings

Embodiments of the present disclosure will now be described, by way of example only, with reference to the attached figures.

FIG. 1 is a flowchart illustrating a method of manufacturing a fiber-reinforced composite material.

FIG. 2 is a sectional side view of a fiber-reinforced composite material.

FIG. 3 is a perspective view of an electronic device that includes a fiber-reinforced composite housing.

### Detailed Description

Plastic or glass woven fiber composite materials may be utilized in products in which a visible fiber is desirable and in which weight, mechanical strength, rigidity, and/or dimensional stability are important. Glass woven fiber composites are particularly advantageous because of their superior mechanical performance. Glass woven fiber typically has no colour and may be utilized to provide a very light coloured or white part. A woven fiber composite material for very light or white parts with suitable aesthetic qualities is desirable.

The following describes a fiber-reinforced composite material and a method for manufacturing the fiber-reinforced composite material. Fiber-reinforced composite material can include materials reinforced with fibers made of glass (which may include any of several amorphous solids usually predominantly composed of silica with metal oxides), as well as various crystalline materials, plastics, and polymers, or any combination thereof. The method includes applying a paint layer including pigment to a woven fiber sheet and drying the paint layer on the woven fiber sheet, imbedding the woven fiber sheet in a resin at a temperature below a melting temperature of the pigment to yield a resin and fiber composite, and applying an ultraviolet protectant coating to the resin and fiber composite.

When a fiber-reinforced composite material is painted in a conventional fashion, very light or white parts may suffer from degradation or environmental instability in that the parts may turn yellow or discolour over time or in sunlight. The materials and methods described herein may resist such degradation or instability for longer times. The application of paint to the woven fiber sheet facilitates display or visibility of the fibers in the finished part. The use of a paint that provides ultraviolet protection and the application of an ultraviolet protectant to the resin and fiber composite increases environmental stability.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein. Words such as "substantially" or "generally," as used herein, are intended to be descriptive but to avoid strict application or strict mathematical definition. To illustrate, two surfaces that are "substantially parallel" may be strictly parallel or approximately parallel. The absence of any words that expressly avoid strict application or definition (in the detailed description and in the claims), however, does not necessarily mean that strictness is intended. The woven fiber composite material described herein may be utilized in a variety of applications, including portable electronic devices.

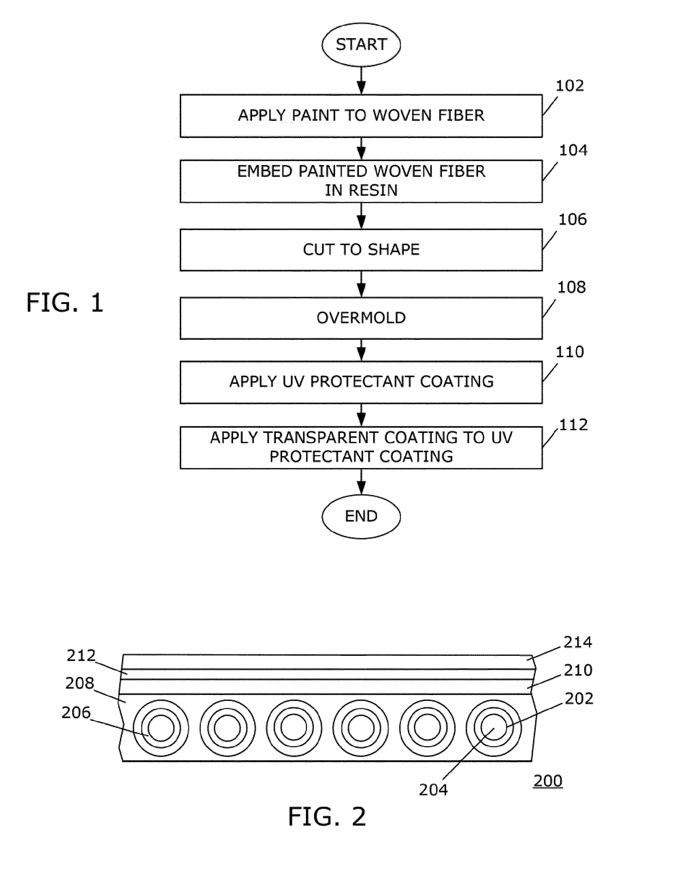

A flowchart illustrating a method of manufacturing a fiber-reinforced composite material is shown in FIG. 1. The method may contain additional or fewer processes than shown and/or described.

A woven fiber sheet, such as a woven plastic fiber or woven glass fiber sheet, is utilized to provide mechanical strength and rigidity in a composite material. For simplicity of explanation, the method will be described using fiber made of glass. A glass fiber sheet may have a twill, denim, or other suitable weave pattern. A paint layer is applied to the woven fiber sheet at 102 by painting less than the entire surface of the woven fiber sheet. For example, about 2/3 of the surface of the woven fiber sheet may be painted. To facilitate adhesion of the woven fiber sheet 102, not all of the surface of the woven fiber sheet is painted. Less than the entire surface may be painted by controlling the viscosity of the paint and the amount of paint applied. By painting less than the entire surface of the woven fiber sheet, mechanical performance of the composite is improved with little loss in aesthetic qualities by comparison to a composite with the entire surface of the woven fiber sheet painted. The improvement is a result of better adhesion of the resin and glass than the adhesion of the resin and paint.

The woven fiber sheet may pass from roll to roll and the paint may be sprayed as the woven fiber sheet moves from roll to roll. The viscosity and the amount of the paint that is applied are controlled to control the amount of coverage of the woven fiber sheet 102. The paint leaves the spray gun in small droplets that land on the surface of the woven fiber sheet. The amount that the droplets spread after landing on the woven fiber sheet is a function of the viscosity of the paint. The droplets spread less when a higher viscosity paint is utilized, leaving areas of the surface of the woven fiber that are not covered by the paint. The distance between the rolls, the temperature, and the speed that the sheet moves may depend on the type of paint utilized. The paint may be, for example, an acrylic paint including a pigment to colour the woven fiber sheet. Alternatively, a nonconductive vacuum metallization process may be utilized to apply a reflective metal color. The pigment may be, for example, TiO₂ or ZnS to colour the woven fiber sheet white. The paint may also include metallic flakes or particles that are added to provide reflective flakes or particles in the dried paint. The reflective flakes or particles give a desirable three-dimensional aesthetic effect to the finished product. The reflective flakes or particles may comprise about 4% by weight of the total paint. Excessive reflective flakes or particles may adversely affect the performance of the device in which the fiber-reinforced composite is utilized, by interfering with radio waves.

Optionally, an adhesion layer may be applied to the woven fiber sheet prior to applying the paint layer to facilitate adhesion of the paint to the woven fiber sheet. The adhesion layer may be utilized depending on the woven fiber material and the properties of the paint applied to the woven fiber material. The adhesion layer may be transparent and may be sprayed onto the woven fiber.

After the paint is dried, the painted woven fiber sheet is imbedded in a thermoplastic or thermoset resin at 104. For example, a transparent thermoplastic resin may be utilized. Suitable thermoplastic resins include, for example, polyurethane, polycarbonate, polyamide 12, or polymethyl methacrylate. Alternatively, a thermoset, e.g., a two-part epoxy, may be utilized.

When a thermoplastic resin is utilized, the painted woven fiber sheet may be imbedded in or impregnated by the thermoplastic resin by a pultrusion method that includes passing the painted woven fiber through a thermoplastic resin powder impregnation and heating to form a sheet. The resulting sheet of composite material is cut and may be formed or shaped, for example, in a mold, by heating the sheet and forming. The temperature at which the sheet is formed is dependent on the thermoplastic resin utilized. For example, polyamide 12 may be formed at a temperature of about 220°C and held for about 60 seconds. Thermoplastic polyurethane may be formed at a temperature of about 200°C for about 60 seconds.

When a thermoset is utilized, the painted woven fiber sheet may be imbedded in the thermoset by cutting the woven fiber to a suitable size and shape, placing the woven fiber in a mold and injecting a two-component resin into the mold. The resin is cured to form a shaped product. The resin surrounds the woven fabric sheet to form the shaped composite material. The cycle time for molding and curing may be from about 15 minutes to about one hour. The temperature at which the composite is pressed to cure the resin is below the melting temperature of the pigment utilized in the paint and below the temperature at which the pigment may be absorbed by or incorporated into the resin.

The composite may be cut at 106, for example, by CNC (Computer Numerical Control) machining, after molding to facilitate forming of a final product with tight tolerances. Cutting may also be used to form various physical features, such as cutouts, grooves, apertures, and the like.

The composite material may be overmolded at 108 to add mechanical features to the composite part. For example, a rim (such as a plastic or metal rim) may be overmolded to provide features such as connectors or parts of connectors for cooperating with other components or devices to couple the composite material to another component or device.

An ultraviolet protectant primer coating is applied to the shaped resin and fiber composite at 110. The ultraviolet protectant coating may be a waterborne or solvent paint that is applied by spray painting a coating of, for example, 15µm thickness, onto the composite part. The paint may be, for example, polyurethane based or may be acrylic.

A transparent coating or coatings are applied to the composite at 112, covering the ultraviolet protectant coating. For example, the coatings may include a mid-coat of about 25µm thickness and a top-coat of about 25µm thickness. The transparent coating is utilized to provide a high gloss finish and to increase scratch resistance of the composite. The coating or coatings may be waterborne or solvent polyurethane based or acrylic paint applied by spray painting.

The fibers may advantageously be partially visible in the formed composite material that results from the above process and the reflective metal flakes or particles provide a three-dimensional aesthetic effect. The ultraviolet protectant that is applied on the resin matrix and the ultraviolet protectant utilized in the paint improves environmental stability and reduces discoloration over time.

The woven fiber-reinforced composite material may be manufactured in various shapes, facilitating ease of manufacture of various components. Additionally, various finishes, textures, and colours may be obtained depending on the nature of the transparent coating, the resin, and paint including the pigment.

FIG. 2 shows a sectional side view of the woven fiber-reinforced composite material 200 manufactured in accordance with the present disclosure. The fiber-reinforced composite material includes the woven fiber sheet 202 including fibers 204 painted with the layer of paint 206. The paint may also include the reflective metal flakes or particles that provide the three-dimensional effect or perception of depth.

The woven fiber sheet 202 is embedded in the resin matrix 208 and the ultraviolet protectant primer coating 210 is disposed on the resin matrix 208 to protect the reinforced composite material and increase environmental stability.

A transparent mid-coat 212 is disposed on the ultraviolet protectant primer coating and a transparent top-coat 214 is disposed on the mid-coat 212. The transparent top-coat 214 can increase the gloss finish and can increase scratch-resistance.

The woven fiber composite material 200 may be very thin and light by comparison to a plastic part while still providing mechanical strength, rigidity and dimensional stability. Such a woven fiber composite material 200 may have many applications, such as, for example, use in a housing or enclosure of an electronic device. An electronic device may be portable (readily movable from place to place), and some portable electronic devices may be handheld (sized and shaped to be held or carried in a human hand). Examples of portable electronic devices may include, for example, mobile phones, smart phones, personal digital assistants (PDAs), notebook computers, laptop computers, digital audio/video players, digital audio/video recorders, navigation devices (such as global positioning system navigators), remote controls, tablet computers. Some electronic devices may retransmit or receive information wirelessly, such as by radio waves. Advantageously, the woven fiber composite material 200 is substantially transparent to radio waves. Thus, interference of the woven fiber composite material 200 with transmission or reception at an internal antenna of an electronic device is reduced by comparison to a metal or carbon fiber composite material. Further advantages may include ease of manufacture, durability, lightness of weight (which can be especially important for portable electronic devices), convenience of shaping, flexibility of aesthetic qualities (such as colour, texture and finish), maintenance of the aesthetic qualities for a long time, and adaptability to a variety of shapes and sizes and kinds of components.

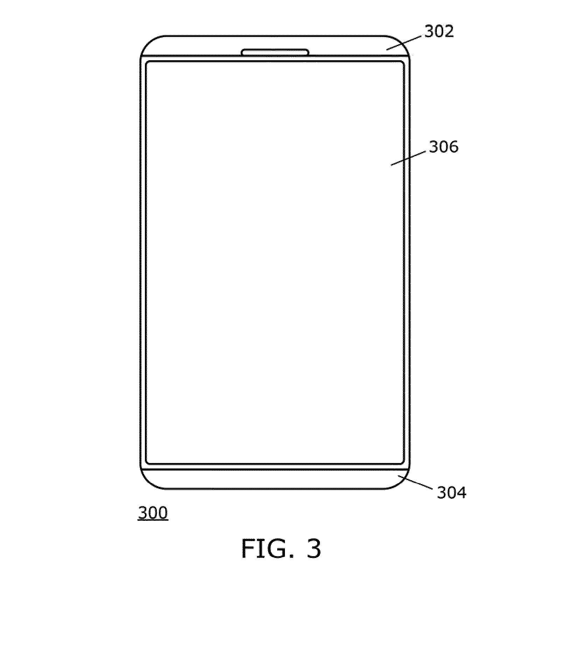

One example of an electronic device 300 that has a housing including the woven fiber composite material is illustrated in FIG. 3. The housing 302 may include multiple components. In the example shown in FIG. 3, the electronic device is a portable electronic device and the housing includes a back (not shown) and two front portions 302, 304, that are disposed above and below a display 306 when the portable electronic device 100 is in a portrait orientation. The two front portions 302, 304 and the back are coupled together to house and protect internal operational components of the electronic device 100. The two front portions 302, 304 and the back may comprise the woven fiber composite material 200 as described above. Thus, the woven fiber composite material 200 is cut to shape to provide the front portions 302, 304 and the back. The front portions 302, 304 and the back are overmolded to include connectors such as snap fit connectors or other suitable connectors to couple the parts together.

The described embodiments are to be considered in all respects only as illustrative and not restrictive. The scope of the claims should not be limited by the preferred embodiments set forth in the examples, but should be given the broadest interpretation consistent with the description as a whole. Many variations and equivalents may be within the scope of the claims and such variations and equivalents are to be embraced within their scope.

## Claims

1. A method of manufacturing a fiber-reinforced composite material, the method comprising:
applying a paint layer including pigment to a woven fiber sheet and drying the paint layer on the woven fiber sheet;
imbedding the woven fiber sheet with a resin at a temperature below a melting temperature of the pigment to yield a resin and fiber composite;
applying an ultraviolet protectant coating to the resin and fiber composite.

2. The method according to claim 1, wherein the paint layer includes metallic flakes or particles to provide reflective flakes or particles in the dried paint layer.

3. The method according to claim 1, wherein the pigment comprises at least one of TiO₂ and ZnS to yield a white fiber-reinforced composite material.

4. The method according to claim 1, wherein the resin comprises a transparent thermoplastic comprising at least one of thermoplastic polyurethane, polycarbonate, polyamide 12, and polymethyl methacrylate.

5. The method according to claim 1, wherein the resin comprises transparent thermoset.

6. The method according to claim 1, comprising applying at least one transparent coating on the ultraviolet protectant coating to provide a glossy finish.

7. The method according to claim 6, wherein the ultraviolet protectant coating comprises a primer to facilitate adhesion of the at least one transparent coating.

8. The method according to claim 1, comprising applying an adhesion layer to the woven fiber sheet prior to applying the paint layer to facilitate adhesion of the paint layer.

9. The method according to claim 1, wherein the resin comprises a thermoplastic resin and imbedding comprises rolling the painted woven fiber through a thermoplastic resin bath and heating.

10. The method according to claim 1, wherein the resin comprises a thermoplastic resin and the method comprises cutting the resin and fiber composite and forming the resin and fiber composite to shape prior to applying the ultraviolet protectant coating.

11. The method according to claim 1, wherein the resin comprises a thermoset and imbedding comprises cutting the woven fiber to size and shape, placing the cut woven fiber in a mold, injection molding the thermoset resin, and curing.

12. The method according to claim 1, comprising overmolding a plastic rim over the resin and fiber composite prior to applying the ultraviolet protectant coating.
